# EUROPÄISCHE PATENTSCHRIFT

(11) **EP 1 030 770 B1**
(45) Veröffentlichungstag und Bekanntmachung des Hinweises auf die Patenterteilung: **11.06.2003**
(21) Anmeldenummer: 98954444.0
(22) Anmeldetag: 24.10.1998
(51) Int. Cl.: B29C 65/00

(54) **VERFAHREN ZUR BEFESTIGUNG EINES STOFFES AN EINEM STRUKTURTEIL**
METHOD FOR FIXING A FABRIC TO A STRUCTURAL PART
PROCEDE POUR FIXER UN TISSU SUR UN ELEMENT DE STRUCTURE

(30) Priorität: 19.11.1997 DE 19751192
(43) Veröffentlichungstag der Anmeldung: 30.08.2000
(73) Patentinhaber: smart gmbh, 71272 Renningen (DE)
(72) Erfinder: OVERBERG, Matthias, D-71254 Heimerdingen (DE)
(74) Vertreter: Weiss, Klaus
(86) Internationale Anmeldenummer: EP9806762
(87) Internationale Veröffentlichungsnummer: WO99025539

(56) Entgegenhaltungen:
- DE-A- 4 232 490
- DE-B- 1 299 856
- US-A- 4 532 166

## Beschreibung

Die Erfindung betrifft ein Verfahren gemäß dem Oberbegriff von Anspruch 1.

Ein Verfahren dieser Art ist aus dem Dokument DE-A1-43 32 490 bekannt.

Aus der US 4,684,419 ist ein Verfahren zur Befestigung eines Verdeckstoffes eines Cabriolets bekannt. Dabei erfolgt die Befestigung an einem dreidimensionalen Strukturteil mittels Kleber plus Abdeckleiste oder formschlüssiger Anbindung mit Halteleisten plus Schrauben oder Nieten. Hierbei wird der Stoff über zusätzliche Profile, z.B. Leisten, umgelegt bzw. der Stoff wird zu Taschen geschweißt, die über das Strukturteil geschoben werden. Der Stoff wird dann durch die Leisten plus Schrauben oder Nieten, mit dem Strukturteil verbunden.

Die Verbindung Stoff auf Strukturteil wird bisher in der Praxis mittels einer mechanischen Verbindung hergestellt. Dies erfolgt über Klemmen, über Leisten oder über Einstecken. Eine Verbindung von Stoff mit einem dreidimensionalen Strukturteil durch Verschweißen oder Verkleben ist bisher aufgrund der unvermeidlichen Toleranzen eines Strukturteiles, insbesondere von Kunststoff, technisch nicht prozeßsicher.

Der vorliegenden Erfindung liegt daher die Aufgabe zugrunde, ein Verfahren und eine Verbindung zur Befestigung eines Stoffes mit einem dreidimensionalen Strukturteil zu schaffen.

Erfindungsgemäß wird diese Aufgabe durch die im kennzeichnenden Teil von Anspruch 1 genannten Verfahrensschritte und die in Anspruch 4 beschriebene Verbindung gelöst.

Durch das erfindungsgemäße Verfahren wird eine Verbindung zwischen dem Stoff und dem Strukturteil geschaffen, die unabhängig vom Material des Strukturteils und somit auch unabhängig von dessen Toleranzen durchgeführt werden kann. Auch die Umgebungsbedingungen bzw. unterschiedlichen Toleranzen bei unterschiedlichen Temperaturen sind bei der Verbindung mit Hilfe dieses Verfahrens nicht von Bedeutung. Dadurch, daß die Toleranzen des Strukturteils nicht berücksichtigt werden müssen, können die Stoffe mittels 3-D-Verschweißen (HF-Verschweißen) bzw. 3-D-Verkleben (HF-Verkleben) mit dem Strukturteil verbunden werden.

Durch die in das Strukturteil eingebrachten Löcher ist es möglich, daß Stoff auf Stoff verschweißt bzw. verklebt werden kann.

Vorteilhafte Weiterbildungen und Ausgestaltungen der Erfindung sind in den weiteren Unteransprüchen beschrieben.

Ein Ausführungsbeispiel der Erfindung ist anhand der Zeichnung beschrieben.

Es zeigt:
- Fig. 1: eine Draufsicht auf ein erfindungsgemäßes Strukturteil;
- Fig. 2: einen Schnitt durch ein erfindungsgemäßes Strukturteil nach der Linie II-II der Fig. 1; und
- Fig. 3: einen Schnitt durch ein Strukturteil in geschlossenem Zustand eines Cabrio-Verdecks.

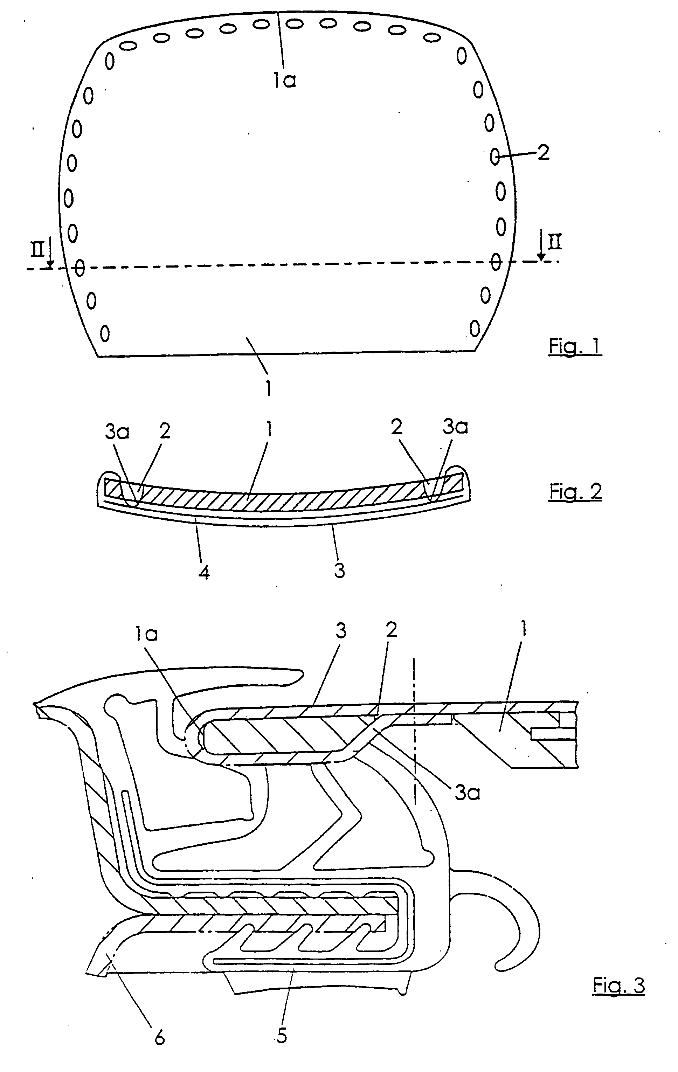

Fig. 1 zeigt ein Strukturteil 1 wie es z.B. bei Verdecken von Cabriolets verwendet wird. Dieses Strukturteil 1 ist an seinem Randbereich mit einer Vielzahl von Löchern 2 versehen.

Wie in Fig. 2 z.B. auf der Oberseite erkennbar, wird das Strukturteil 1 an einer seiner Flächen vollständig von Stoff 3 umgeben. An einer Vorderkante 1a des Strukturteils 1 wird der Stoff 3 umgebogen und auf der Unterseite des Strukturteils 1 wieder zurückgeführt. Auf der Unterseite des Strukturteils 1 ist der Stoff 3 sägezahnartig in die Löcher 2 des Strukturteils 1 gesteckt, wobei eine Vielzahl von Stofflappen 3a vorstehen. Die Stofflappen 3a sind so groß, daß sie in die Löcher 2 passen. Die Stofflappen 3a werden durch die Löcher 2 gesteckt und mittels HF-Schweißung oder HF-Verklebung mit der Rückseite des Stoffes 3 der anderen Seite verbunden.

Zwischen dem Strukturteil 1 und dem Stoff 3 kann bei Bedarf ein Schweißhilfsmittel 4 eingelegt werden. Das Schweißhilfsmittel 4, das in Fig. 2 dargestellt ist, dient der Verbindung der Stofflappen 3a mit dem Stoff 3, falls diese nicht unmittelbar miteinander verschweißbar bzw. verklebbar sind. Dies kann z.B. der Fall sein, wenn bei dem Stoff 3 und den Stofflappen 3a die textilen Seiten aufeinandertreffen. In diesem Fall muß ein Schweißhilfsmittel 4 entlang der Schweißpunkte zwischen den Stoff 3 und den Stofflappen 3a gelegt werden. Durch die HF-Schweißung verschmilzt das Schweißhilfsmittel 4 mit dem Stoff 3 und den Stofflappen 3a.

Die Löcher 2 können mit einer Anschrägung versehen sein. Durch diese Anschrägung wird verhindert, daß sich nach dem Umlegen bzw. Einführen der Stofflappen 3a in die Löcher 2 Falten oder Risse bilden. Diese Falten oder Risse im Stoff könnten zu Undichtigkeiten führen. Durch dieses Anschrägen wird ein sicherer Prozeß erzielt.

Wie aus Fig. 1 ersichtlich, können die Löcher 2 in regelmäßigen oder unregelmäßigen Abständen in dem Randbereich des Strukturteils 1 eingebracht werden. Das Strukturteil 1 kann im Cabriolet-Bereich als Dachspitze, Spriegel, Spannbügel oder Dachrahmen ausgebildet sein.

Fig. 3 zeigt das Strukturteil 1 im geschlossenen Zustand eines Cabriolet-Verdecks mit einer Dichtung 5 und einer Karosserie 6. Hierbei befindet sich an der von der Dichtung 5 abgewandten Seite des Strukturteils 1 der Stoff 3. Der Stoff 3 ist um das Strukturteil 1 derart gewickelt, daß sich an der der Dichtung zugewandten Seite des Strukturteils 1 Stofflappen 3a befinden. Die Stofflappen 3a umschließen die Löcher 2 des Strukturteils 1. Mit Hilfe des entsprechenden HF-Schweiß- bzw. HF-Klebewerkzeugs werden die Stoffteile 3, 3a durch die Löcher 2 miteinander verbunden.

Das Strukturteil 1 kann aus verschiedenem Material bestehen. Das gewählte Material hat keinen Einfluß auf die HF-Schweißung oder HF-Verklebung, da in jedem Fall lediglich Stoff mit Stoff verbunden wird. Damit haben auch eventuelle Toleranzschwankungen bei dem gewählten Material des Strukturteils 1 keinerlei Auswirkungen auf die Befestigung des Stoffes 3.

Das erfindungsgemäße Verfahren kann selbstverständlich in allen Bereichen eingesetzt werden, in denen Stoffe 3, 3a mit Strukturteilen 1 verbunden werden müssen.

## Patentansprüche

1. Verfahren zur Befestigung eines Stoffes an einem Strukturteil, wobei das Strukturteil mindestens auf einer Seite zumindest teilweise von Stoff umgeben wird, wobei
das mit Löchern versehene Strukturteil (1) wenigstens im Bereich der Löcher (2) auf beiden Lochöffnungsseiten von dem Stoff (3) umgeben wird,
**dadurch gekennzeichnet, daß**
wenigstens auf einer Seite durch die Löcher (2) gebrachte Stofflappen (3a) mit dem Stoff (3) der anderen Seite im Bereich der Lochöffnungen durch Verkleben oder Verschweißen miteinander verbunden werden.

2. Verfahren nach Anspruch 1,
**dadurch gekennzeichnet, daß**
der Stoff eines Fahrzeugs, wie Verdeckstoff eines Cabriolets, an dem Strukturteil (1) befestigt wird.

3. Verfahren nach Anspruch 1 oder 2,
**dadurch gekennzeichnet, daß**
die Stofflappen (3a) einer Seite mit dem Stoff (3) der anderen Seite mittels HF-Schweißung oder HF-Verklebung verbunden werden.

4. Verfahren nach Anspruch 1, 2 oder 3,
**dadurch gekennzeichnet, daß**
die Stofflappen (3a) einer Seite mit dem Stoff (3) der anderen Seite durch ein dazwischengelegtes Schweißhilfsmittel (4) verbunden werden.

5. Verbindung eines Stoffes, insbesondere des Stoffes eines Fahrzeuges, wie Verdeckstoff eines Cabriolets, mit einem Strukturteil, wobei das Strukturteil wenigstens teilweise von dem Stoff umgeben ist, hergestellt durch das Verfahren nach Anspruch 1, wobei
a) das Strukturteil (1) mit einer Vielzahl von Löchern (2) versehen ist;
b) das Strukturteil (1) wenigstens im Bereich der Löcher (2) auf beiden Lochöffnungsseiten von dem Stoff (3) umgeben ist;
**dadurch gekennzeichnet, daß**
c) der Stoff (3) wenigstens auf einer Seite Stofflappen (3a) aufweist;
d) die Stofflappen (3a) in die Löcher (2) eingebracht sind, und
e) die in die Löcher (2) eingebrachten Stofflappen (3a) mit dem Stoff (3) auf der anderen Lochöffnungsseite im Bereich der Löcher (2) durch Verschweißen oder Verkleben verbunden sind.

6. Verbindung nach Anspruch 5,
**dadurch gekennzeichnet, daß**
der Stoff für ein Fahrzeug, wie Verdeckstoff eines Cabriolets, vorgesehen ist.

7. Verbindung nach Anspruch 5 oder 6,
**dadurch gekennzeichnet, daß**
die Stofflappen (3a) einer Seite mit dem Stoff (3) der anderen Seite mittels HF-Schweißung oder HF-Verklebung verbunden sind.

8. Verbindung nach Anspruch 5, 6 oder 7,
**dadurch gekennzeichnet, daß**
die Löcher (2) wenigstens auf der Lochöffnungsseite über die die Stofflappen (3a) in die Löcher (2) eingebracht werden, mit einer Anschrägung versehen sind.

9. Verbindung nach einem der Ansprüche 5 bis 8,
**dadurch gekennzeichnet, daß**
die Löcher (2) in regelmäßigen Abständen in einem Randbereich des Strukturteils (1) eingebracht sind.

10. Verbindung nach einem der Ansprüche 5 bis 9,
**dadurch gekennzeichnet, daß**
das Strukturteil (1) als Dachspitze, Spriegel, Spannbügel oder Dachrahmen ausgebildet ist.

## Claims

1. A process for joining a fabric to a structural part, the structural part being at least partially enclosed by fabric on at least one side,
**characterised in that**
the structural part (1) which is provided with holes is enclosed by the fabric (3) on both hole opening sides at least in the region of the holes (2) as a result of which folds of fabric (3a) pulled through the holes (2) on one side are joined to the fabric (3) in the region of the hole openings on the other side by means of gluing or bonding.

2. A process in accordance with claim 1,
**characterised in that**
the fabric of a vehicle, such as the fabric top of a cabriolet, is fixed to the structural part (1).

3. A process in accordance with claim 1 or 2,
**characterised in that**
the folds of fabric (3a) on one side are joined to the fabric (3) on the other side by means of HF gluing or HF bonding.

4. A process in accordance with claim 1, 2 or 3,
**characterised in that**
the folds of fabric (3a) on one side are joined to the fabric (3) on the other side by means of a bonding aid (4) placed between them.

5. A joint between a fabric, in particular the fabric of a vehicle such as the fabric top of a cabriolet, and a structural part, the structural part being at least partly enclosed by the fabric, produced by means of the process disclosed in claim 1,
**characterised in that**
a) the structural part (1) is provided with a plurality of holes (2),
b) the structural part (1) is enclosed by the fabric (3) on both hole opening sides at least in the region of the holes (2),
c) the fabric (3) has folds of fabric (3a) on at least one side,
d) the folds of fabric (3a) are pushed through the holes (2),
e) the folds of fabric (3a) pushed through the holes (2) are joined to the fabric (3) on the other hole opening side in the region of the holes (2) by means of gluing or bonding.

6. A joint in accordance with claim 5,
**characterised in that**
the fabric is provided for a vehicle such as the fabric top of a cabriolet

7. A joint in accordance with claim 5 or 6,
**characterised in that**
the folds of fabric (3a) on one side are joined to the fabric (3) on the other side by means of HF gluing or HF bonding.

8. A joint in accordance with claim 5, 6 or 7,
**characterised in that**
the holes (2) are provided at least on the hole opening side with an oblique part via which the folds of fabric (3a) are pushed through the holes (2).

9. A joint in accordance with one of claims 5 to 8,
**characterised in that**
the holes (2) are made at regular intervals in an edge region of the structural part (1).

10. A joint in accordance with one of claims 5 to 9,
**characterised in that**
the structural part (1) is designed as a header bow, top bow, tack strip or roof rail.

## Revendications

1. Procédé pour fixer un tissu sur un élément de structure, l'élément de structure, au moins sur une face, étant entouré du moins partiellement par un tissu, **caractérisé en ce que** l'élément de structure (1) pourvu de trous, du moins dans la zone des trous (2), est entouré de tissu (3) sur les deux faces d'ouvertures de trous, après quoi au moins sur une face, des languettes de tissu (3a) introduites dans les trous (2) sont reliées par collage ou soudage au tissu (3) de l'autre face dans la zone des ouvertures de trous.

2. Procédé selon la revendication 1, **caractérisé en ce que** le tissu d'un véhicule, tel qu'un tissu d'une capote d'un cabriolet, est fixé sur l'élément de structure (1).

3. Procédé selon la revendication 1 ou 2, **caractérisé en ce que** les languettes de tissu (3a) d'une face sont reliées au tissu (3) de l'autre face à l'aide d'un soudage HF ou d'un collage HF.

4. Procédé selon la revendication 1, 2 ou 3, **caractérisé en ce que** les languettes de tissu (3a) d'une face sont reliées au tissu (3) de l'autre face à l'aide d'un moyen auxiliaire de soudage (4) intercalé.

5. Assemblage d'un tissu, notamment d'un tissu d'un véhicule, tel qu'un tissu d'une capote d'un cabriolet, avec un élément de structure, l'élément de structure étant au moins partiellement entouré par le tissu, réalisé par le procédé selon la revendication 1, **caractérisé en ce que**
a) l'élément de structure (1) est pourvu d'une pluralité de trous (2) ;
b) l'élément de structure (1), du moins dans la zone des trous (2), est entouré du tissu (3) sur les deux faces d'ouvertures de trous ;
c) le tissu (3), au moins sur une face, présente des languettes de tissu (3a) ;
d) les languettes de tissu (3a) sont introduites dans les trous (2), et
e) les languettes de tissu (3a) introduites dans les trous (2) sont reliées par collage ou soudage au tissu (3) sur l'autre face d'ouvertures de trous dans la zone des trous (2).

6. Assemblage selon la revendications 5, **caractérisé en ce que** le tissu est prévu pour un véhicule, tel qu'un tissu d'une capote d'un cabriolet.

7. Assemblage selon la revendication 5 ou 6, **caractérisé en ce que** les languettes de tissu (3a) d'une face sont reliées au tissu (3) de l'autre face à l'aide d'un soudage HF ou d'un collage HF.

8. Assemblage selon la revendication 5, 6 ou 7, **caractérisé en ce que** les trous, au moins sur la face d'ouvertures de trous par lesquelles les languettes de tissu (3a) sont introduites dans les trous (2), sont pourvus d'un chanfrein.

9. Assemblage selon l'une quelconque des revendications 5 à 8, **caractérisé en ce que** les trous (2) sont aménagés à des intervalles réguliers dans une zone périphérique de l'élément de structure (1).

10. Assemblage selon l'une quelconque des revendications 5 à 9, **caractérisé en ce que** l'élément de structure (1) est réalisé comme une pointe de toit, un arceau, un étrier de tension ou un cadre de toit.
